# EUROPÄISCHE PATENTSCHRIFT

(11) **EP 2 653 324 B1**
(45) Veröffentlichungstag und Bekanntmachung des Hinweises auf die Patenterteilung: **18.05.2016**
(21) Anmeldenummer: 13152288.0
(22) Anmeldetag: 23.01.2013
(51) Int. Cl.: B60C 23/00

(54) **Landwirtschaftliche Erntemaschine**
Agricultural harvester
Moissonneuse agricole

(30) Priorität: 18.04.2012 DE 102012007636
(43) Veröffentlichungstag der Anmeldung: 23.10.2013
(73) Patentinhaber: CLAAS Selbstfahrende Erntemaschinen GmbH, 33428 Harsewinkel (DE)
(72) Erfinder: Diekhans, Norbert, Dr., 33335 Gütersloh (DE); Wagemann, Sebstatian, 59302 Oelde (DE); Tilly, Thomas, 48231 Warendorf (DE); Krauß, Andreas, 39613 Schwalmstadt (DE); Fuhrmann, Carsten, 33604 Bielefeld (DE)

(56) Entgegenhaltungen:
- WO-A1-01/50835
- DE-A1- 4 109 392
- US-A- 5 629 874
- US-A1- 2007 068 238

## Beschreibung

Die vorliegende Erfindung betrifft eine landwirtschaftliche Erntemaschine gemäß dem Oberbegriff des Anspruches 1.

Landwirtschaftliche Erntemaschine weisen üblicherweise eine Antriebsachse sowie eine Lenkachse auf, die jeweils mit Reifen bestückt sind. Die Konstruktion moderner Reifen ist an die spezifischen Anforderungen auf ihrem jeweiligen Einsatzgebiet angepasst. An einer Antriebsache kommen so genannte Traktionsreifen zum Einsatz, um ein größtmögliches Drehmoment auf Ackerboden übertragen zu können, während an gezogenen Achsen mit hoher Achslast andere Reifentypen Verwendung finden. Hier werden unter anderem so genannte Implementreifen verwendet, die sich durch hohe zulässige Fahrgeschwindigkeiten sowie einen geringen Rollwiderstand auszeichnen.

Aus der DE 41 09 392 A1 ist eine Reifendruckregelanlage für eine allradgetriebene landwirtschaftliche Erntemaschine bekannt. Die Druckregelung zur Änderung des Reifeninnendruckes erfolgt bei Betätigung einer Schaltkupplung für den Allradantrieb. Hierbei wird bei zugeschaltetem Allradantrieb der Luftdruck in allen Reifen auf einen für die Reifen zulässigen Bereich abgesenkt.

Aufgabe der vorliegenden Erfindung ist es, eine landwirtschaftliche Erntemaschine derart weiterzuentwickeln, dass eine Verwendung verschiedener Reifentypen mit ihren konstruktionsbedingt unterschiedlichen Fahreigenschaften an den jeweiligen Achsen einer allradgetriebenen Erntemaschine unter Ausnutzung der spezifischen Vorteile des jeweiligen Reifentyps möglich ist.

Diese Aufgabe wir erfindungsgemäß durch die kennzeichnenden Merkmale des Anspruches 1 gelöst.

Vorteilhafte Weiterbildungen sind Gegenstand der Unteransprüche.

Erfindungsgemäß wird vorgeschlagen, dass zumindest die weitere Achse mit Reifen, vorzugsweise mit Implementreifen, bestückt ist, deren Reifeninnendruck bei einer Zuschaltung des Allradantriebes einen höheren Wert annimmt als bei abgeschaltetem Allradantrieb, indem die Steuereinheit das Zu- oder Abschalten des Allradantriebes erkennt und eine Veränderung des Reifeninnendruckes der Reifen durch die Reifendruckregelanlage initiiert. Insbesondere Implementreifen weisen konstruktiv bedingt bei einem Einsatz auf einer gezogenen oder angetriebenen Achse signifikante Differenzen des zulässigen Reifeninnendruckes auf, weshalb eine Anpassung an sich ändernde Betriebsmodi sinnvoll ist. Entsprechend der jeweiligen Betriebsart der weiteren Achse, die beispielsweise mit Implementreifen bestückt ist, werden die Reifen bei ausgeschaltetem Allradantrieb mit einem niedrigeren Reifeninnendruck betrieben, wodurch sich bei der Fahrt auf dem Feld ein bodenschonender Betrieb ergibt. Für den Fall, dass während der Fahrt auf dem Feld die Traktion heraufgesetzt werden soll, wird der Allradantrieb zugeschaltet, was zu einer Erhöhung des Reifeninnendruckes der Reifen führt.

Vorzugsweise kann die weitere Achse als Lenkachse ausgeführt sein. Antreibbare Lenkachsen von Erntemaschine, die mit Implementreifen bestückt sind, sind im Rollbetrieb betreibbar, wobei bei dem Betrieb der Erntemaschine auf dem Feld ein Reifeninnendruck eingestellt wird, der unterhalb des Wertes für den Betrieb als angetriebene Lenkachse liegt. Hieraus resultieren entsprechende Vorteile, insbesondere eine geringere Bodenverdichtung.

In vorteilhafter Weiterbildung kann die Steuereinheit der Reifendruckregelanlage mit einer Steuerungsvorrichtung der Erntemaschine verbunden sein. Somit kann von der Steuerungsvorrichtung ein Signal an die Steuereinheit gesandt werden, welches das Zuschalten beziehungsweise Abschalten des Allradantriebes repräsentiert. Die Steuereinheit wertet das Signal aus und steuert die Mittel der Reifendruckregelanlage entsprechend an, um in Abhängigkeit von dem Betriebszustand den Reifeninnendruck der Implementreifen zu verändern.

Vorteilhafterweise kann die Erntemaschine eine Sensorik aufweisen, die die Beschaffenheit des Untergrundes, auf der die Erntemaschine bewegt wird, detektiert. Das Unterscheiden der Beschaffenheit des Untergrundes ermöglicht es, zwischen einer Straßenfahrt und einer Feldfahrt zu unterscheiden. Das Erkennen des Befahrens eines Feldes führt zu einem automatischen Zuschalten des Allradantriebes, entsprechend lässt sich in Abhängigkeit von dieser Information die Reifendruckregelanlage durch die Steuereinheit ansteuern, um im Betriebsmodus Feldfahrt einen anderen Reifeninnendruck einzustellen als im Betriebsmodus Straßenfahrt. So kann sich im Betriebsmodus Feldfahrt ein insgesamt niedrigerer Reifeninnendruck einstellen als im Betriebsmodus Straßenfahrt mit abgeschaltetem Allradantrieb.

Hierzu kann die Sensorik zur Detektion der Bodenbeschaffenheit als ein optischer Sensor ausgeführt sein. Vorzugsweise kann eine Kamera Anwendung finden, um die Beschaffenheit des Bodens zu bestimmen. Die Auswertung von Bildsignalen ermöglicht die Unterscheidung des jeweils befahrenen Untergrundes, um in Abhängigkeit von einer Straßenfahrt oder einer Feldfahrt die Reifendruckregelanlage erfindungsgemäß anzusteuern.

Alternativ kann die Sensorik zur Detektion der Bodenbeschaffenheit als ein akustischer Sensor ausgeführt sein. Beispielsweise kann ein Ultraschallsensor zum Einsatz kommen. Anhand der Auswertung der vom Untergrund reflektierten Schallwellen kann auf die Bodendichte geschlossen werden, was eine Unterscheidung zwischen unterschiedlichen Untergründen ermöglicht.

Insbesondere kann die Erntemaschine eine Sensorik umfassen, die zur Bestimmung der Fahrgeschwindigkeit eingerichtet ist. Zusätzlich oder alternativ kann die Ansteuerung der Reifendruckregelanlage durch die Steuereinheit geschwindigkeitsabhängig erfolgen.

Weiterhin kann die Erntemaschine mit einer Sensorik ausgestattet sein, die zur Bestimmung der jeweiligen Achslast der Antriebsachse sowie der weiteren Achse eingerichtet ist. Hierzu kann der Sensor als ein Drucksensor ausgeführt sein, der die Masse eines an der Erntemaschine angeordneten Vorsatzgerätes überwacht, welches über eine Stützhydraulik abgestützt wird.

Vorliegende Erfindung wird nachfolgend anhand eines in der Zeichnung dargestellten Ausführungsbeispieles näher erläutert.

Es zeigen:
- Fig. 1: eine schematische Ansicht einer selbstfahrenden Erntemaschine;
- Fig. 2: eine schematische Ansicht eines Antriebstranges, vorzugsweise einer landwirtschaftlichen Erntemaschine;

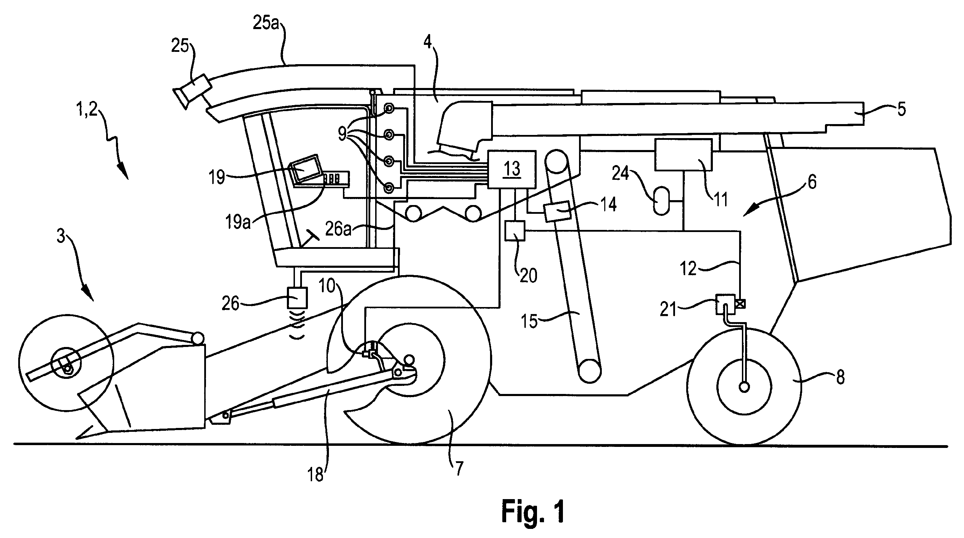

Fig. 1 zeigt beispielhaft ein als an sich bekannter und daher hier nicht näher erläuterter Mähdrescher 2 ausgeführte landwirtschaftliche Erntemaschine 1. Der Mähdrescher 2 weist eine vordere Antriebsachse 16 mit gasgefüllten Radreifen 7 sowie eine hintere Lenkachse 17 mit ebenfalls gasgefüllten Radreifen 8 auf. Der Mähdrescher 2 ist mit einer Reifendruckregelanlage 6 ausgestattet, mit der der Reifendruck der gasgefüllter Radreifen 8 auf der Lenkachse 17 verändert werden kann. Diese Reifendruckregelanlage 6 besteht aus einem Druckluftkompressor 11 sowie einem Speicher 14, die über eine Zuleitung 12 mit den Radreifen 8 der Lenkachse 17 verbunden sind. In der Zuleitungen 12 ist ein verstellbares Ventil 21 eingebaut, welches ein kontrolliertes Befüllen und Entleeren der Radreifen 8 der Lenkachse 17 beziehungsweise ein Halten des Reifendrucks ermöglichen. Das Ventil 21 ist an eine Steuereinheit 20 angeschlossen, welche die Stellung des Ventils 21 regelt. Mit Hilfe der Steuereinheit 20 lässt sich der Reifendruck in Abhängigkeit von der Maschinenmasse des Mähdreschers 2 regeln.

Der Mähdrescher 2 erntet das Erntegut mit dem Vorsatzgerät 3 vom Feld und bereitet es auf. Dabei wird das Erntegut mit an sich bekannten Einrichtungen im und am Mähdrescher 2 in Körner und Stroh sowie Spreu getrennt. Das Stroh und die Spreu werden hinter dem Mähdrescher 2 auf dem Feld abgelegt. Die Körner werden über einen Kornelevator 3 in einen Korntank 4 im Mähdrescher 2 gefördert, wo sie zwischengelagert werden. Ist der Korntank 4 befüllt, wird er mit einem Korntankentleerrohr 5 in einen Ladewagen (nicht dargestellt) entleert. In dem Kornelevator 15 ist ein Ertragssensor 14 angeordnet, der ein in einem begrenzten Zeitraum in den Korntank 4 gefördertes Volumen an Körnern erfasst und ein zugehöriges Signal generiert. Im Inneren des Korntanks 4 sind mehrere Füllstandssensoren 9 in unterschiedlichen Höhen übereinander angeordnet, die mit dem aktuellen Füllstand im Korntank 4 korrespondierende Signale generieren. Der Füllstand im Korntank 4 lässt Rückschlüsse auf das aktuelle Gesamtgewicht des Mähdreschers 2 zu. Zudem kann die Masse des Vorsatzgerätes 3 mit Drucksensoren 10 an einer Stützhydraulik 18 für das Vorsatzgerät 3 bestimmt werden, um auf das Gesamtgewicht des Mähdreschers 2 zu schließen. Die Füllstandsensoren 9 wie auch die Drucksensoren 10 stehen mit einer Steuerungseinrichtung 13 in Verbindung, die unter anderem der Auswertung der von den genannten Sensoren übermittelten Signale dient. Weiterhin ist auch die Steuereinheit 20 über eine Signalleitung mit der Steuerungseinrichtung 13 verbunden. An die Steuereinrichtung 13 sind ein in der Kabine des Mähdreschers 2 befindliches Display 19 sowie ein Steuertaster 19a angeschlossen.

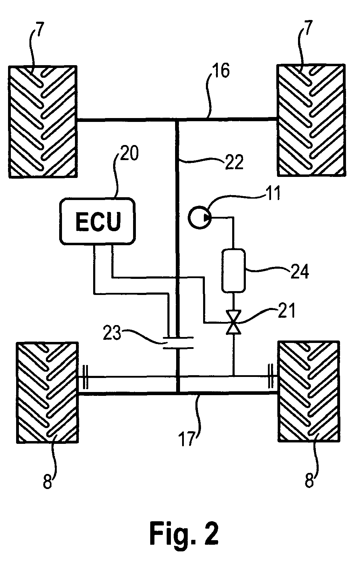

In Fig. 2 ist eine schematische Ansicht eines Antriebstranges 22 dargestellt, welcher die Antriebsachse 16 und die mindestens eine der Antriebsachse 16 nachgeordnete Achse, die als Lenkachse 17 ausgebildet ist, antriebsmäßig verbindet. Der Antriebsstrang 22 ist durch eine Schaltvorrichtung 23 unterbrochen, so dass bei ausgeschaltetem Allradantrieb nur die Antriebsachse 16 mit dem Antriebsstrang 22 gekoppelt ist. Bei zugeschaltetem Allradbetrieb wird die Schaltvorrichtung 23 betätigt, um eine Drehmomentübertragung vom Antriebsstrang 22 auch auf Lenkachse 17 zu ermöglichen. Die Radreifen 7 der Antriebsachse 16 sowie die Radreifen 8 der Lenkachse 17 sind als so genannte Implementreifen oder als Radreifen mit einer vergleichbaren Charakteristik ausgeführt. Es liegt im Rahmen der Erfindung, dass das Fahrzeug 1 über eine Vielzahl von Fahrzeugachsen verfügen kann.

Gemäß der Darstellung in Fig. 2 bildet die Antriebsachse 16 die aktiv angetriebene Fahrzeugachse. Die Antriebsachse 16 ist bei Bedarf mit der Lenkachse 17 antriebstechnisch verbindbar, um die Lenkachse 17 ebenfalls antreiben zu können, wie durch die Schaltvorrichtung 23 angedeutet ist. Die als Lenkachse 17 ausgebildete Achse lässt sich mit Hilfe der Schaltvorrichtung 23 zwischen einem Rollbetrieb und einem Allradbetrieb umschalten. Die Ansteuerung der Schaltvorrichtung 23 erfolgt durch die Steuereinheit 20. Dabei kann die Zuschaltung der Lenkachse 17 als weitere angetriebene Achse manuell durch einen Bediener ausgelöst werden oder automatisiert in Abhängigkeit von äußeren Parametern erfolgen, die das Fahrverhalten des Mähdreschers 2 beeinflussen. Für eine manuelle Auslösung durch den Bediener ist der Steuertaster 19a in der Kabine des Mähdreschers 2 vorgesehen, durch dessen Betätigung das Zu- und Abschalten des Allradantriebes auslösbar ist. Die manuelle Auslösung der Zuschaltung des Allradantriebes durch einen Bediener führt zu einem Absenken des Reifendruckes der Radreifen 8 der Lenkachse 17.

Bei einer automatisierten, durch die Steuereinrichtung 13 gesteuerten Zu- oder Abschaltung des Allradantriebes erfolgt das Zu- oder Abschalten des Allradantriebes in Abhängigkeit von das Fahrverhalten beeinflussenden Parametern, die sensorisch erfasst werden. Hierzu zählen beispielsweise das Gewicht des Mähdreschers 2, welches sich im laufenden Erntebetrieb kontinuierlich verändert, oder der Untergrund, auf welchem der Mähdrescher 2 bewegt wird.

Als Sensorik zur Detektion des Untergrundes, auf welchem der Mähdrescher 2 jeweils bewegt wird, sind der Einsatz von optischen Sensoren wie einer Kamera 25 oder akustischen Sensoren wie Ultraschallsensoren 26 denkbar. Wie in Fig. 1 beispielhaft dargestellt, ist eine die Kamera 25 am Kabinendach des Mähdreschers 2 angeordnet, um den Untergrund vor dem Vorsatzgerät 3 optisch erfassen zu können. Die Kamera 25 ist über eine Signalleitung 25a mit der Steuereinrichtung 13 verbunden. Weiterhin ist als Alternative oder Ergänzung zu der Kamera 25 ein Ultraschallsensor 26 im Bereich der Antriebsachse 16 angeordnet. Die Anordnung ist so gewählt, dass die von dem Ultraschallsensor abgegebenen Schallwellen ungehindert auf den Untergrund auftreffen können, um das Messergebnis nicht durch Komponenten am Mähdrescher 2 wie dem Einzugskanal zu verfälschen. Der Ultraschallsensor 26 steht über eine Signalleitung 26a mit der Steuereinrichtung 13 in Verbindung. Die von der Sensorik 25, 26 generierten Signale werden der Steuereinrichtung 13 zur Verfügung gestellt, die diese Signale auswertet, aus denen Rückschlüsse auf die Beschaffenheit des befahrenen Untergrundes gezogen werden. Entsprechend wird in Abhängigkeit von dem Ergebnis der Auswertung durch die Steuereinrichtung 13 der Allradantrieb zu- oder abgeschaltet. Damit einhergehend wird eine Veränderung des Reifeninnendruckes der Radreifen 8 an der Lenkachse 17 durch die Reifendruckregelanlage 6 initiiert, wie nachstehend detaillierter ausgeführt ist.

Der Einsatz von beispielsweise Implementreifen als Radreifen 8 auf der Lenkachse 17 erfordert eine Anpassung des Reifeninnendruckes in Abhängigkeit von dem Antriebsstatus der Lenkachse 17. Dies ist darauf zurückzuführen, dass der zulässige Reifeninnendruck bei einer im Rollbetrieb befindlichen, mit Implementreifen als Radreifen 8 bestückten Lenkachse 17 deutlich geringer ist, als bei einer angetriebenen. Die Steuereinheit 20, welche die Schaltvorrichtung 23 ansteuert, um die Lenkachse 17 zuzuschalten oder abzuschalten, steuert auch die Reifendruckregelanlage 6 an. Entsprechend wird bei einer Umschaltung des Betriebszustandes von Rollbetrieb auf Allradbetrieb der Reifeninnendruck der Radreifen 8 der Lenkachse 17 erhöht beziehungsweise bei einem Umschalten der Lenkachse 17 von Allradantrieb auf Rollbetrieb abgesenkt. Somit wird sichergestellt, dass die Vorteile eines Implementreifens als Radreifen für die Lenkachse 17 im Rollbetrieb voll genutzt werden, da in dieser Betriebsart der Lenkachse 17 der Reifeninnendruck nicht auf dem für den Allradbetrieb der Implementreifen erforderlichen Innendruck gehalten wird. Insbesondere können die Vorteile bei der Bodenschonung auf Grund der großen Aufstandfläche des Implementreifens im Rollbetrieb wie auch die Erhöhung der Wendigkeit der landwirtschaftlichen Erntemaschine 1 durch übertragbare Seitenführungskräfte ausgespielt werden.

**Bezugszeichenliste**

| | | | |
|---|---|---|---|
| 1 | Fahrzeug | 16 | Antriebsachse |
| 2 | Mähdrescher | 17 | Lenkachse |
| 3 | Vorsatzgerät | 18 | Stützhydraulik |
| 4 | Korntank | 19 | Display |
| 5 | Korntankentleerrohr | 19a | Steuertaster |
| 6 | Reifendruckregelanlage | 20 | Steuereinheit |
| 7 | Radreifen der Antriebsachse | 21 | Ventil |
| 8 | Radreifen der Lenkachse | 22 | Antriebsstrang |
| 9 | Füllstandssensor | 23 | Schaltvorrichtung |
| 10 | Drucksensor | 24 | Speicher |
| 11 | Druckluftkompressor | 25 | Kamera |
| 12 | Zuleitungen | 25a | Signalleitung |
| 13 | Steuereinrichtung | 26 | Ultraschallsensor |
| 14 | Ertragssensor | 26a | Signalleitung |
| 15 | Kornelevator | | |

## Patentansprüche

1. Landwirtschaftliche Erntemaschine (1) mit zumindest einer mit Reifen (7) bestückten Antriebsachse (16) und zumindest einer weiteren, mit Reifen (8) bestückten Achse (17), die durch einen ab- oder zuschaltbaren Allradantrieb als gezogene Achse oder angetriebene Achse verwendbar ist, sowie einer Reifendruckregelanlage (6), die Mittel (11, 12, 21) zur Veränderung des Reifeninnendruckes sowie eine Steuereinheit (20) umfasst,
**dadurch gekennzeichnet,**
**dass** zumindest die weitere Achse (17) mit Reifen bestückt ist, deren Reifeninnendruck bei einer Zuschaltung des Allradantriebes einen höheren Wert annimmt als bei abgeschaltetem Allradantrieb, indem die Steuereinheit (20) das Zu- oder Abschalten des Allradantriebes erkennt und eine Veränderung des Reifeninnendruckes der Reifen durch die Reifendruckregelanlage (6) initiiert.

2. Landwirtschaftliche Erntemaschine (1) nach Anspruch 1, **dadurch gekennzeichnet, dass** die weitere Achse als Lenkachse (17) ausgeführt ist.

3. Landwirtschaftliche Erntemaschine (1) nach einem der Ansprüche 1 oder 2, **dadurch gekennzeichnet, dass** die Steuereinheit (20) der Reifendruckregelanlage (6) mit einer Steuerungsvorrichtung (13) der Erntemaschine (1) verbunden ist.

4. Landwirtschaftliche Erntemaschine (1) nach einem der Ansprüche 1 bis 3, **dadurch gekennzeichnet, dass** die Erntemaschine (1) eine Sensorik aufweist, die die Beschaffenheit des Untergrundes, auf der die Erntemaschine (1) bewegt wird, detektiert.

5. Landwirtschaftliche Erntemaschine (1) nach Anspruch 4, **dadurch gekennzeichnet, dass** die Sensorik zur Detektion der Bodenbeschaffenheit als eine Kamera (25) ausgeführt ist.

6. Landwirtschaftliche Erntemaschine (1) nach Anspruch 4, **dadurch gekennzeichnet, dass** die Sensorik zur Detektion der Bodenbeschaffenheit als Ultraschallsensor (26) ausgeführt ist.

7. Landwirtschaftliche Erntemaschine (1) nach einem der Ansprüche 1 bis 6, **dadurch gekennzeichnet, dass** die Erntemaschine (1) eine Sensorik umfasst, die zur Bestimmung der Fahrgeschwindigkeit eingerichtet ist.

8. Landwirtschaftliche Erntemaschine (1) nach einem der Ansprüche 1 bis 7, **dadurch gekennzeichnet, dass** die Erntemaschine (1) mit einer Sensorik ausgestattet ist, die zur Bestimmung der jeweiligen Achslast der Antriebsachse (16) sowie der weiteren Achse (17) eingerichtet ist.

## Claims

1. An agricultural harvester (1) comprising at least one drive axle (16) equipped with tyres (7) and at least one further axle (17) which is equipped with tyres (8) and which can be used by means of an all-wheel drive which can be cut in and out as a towed axle or driven axle, and a tyre pressure regulating installation (6) including means (11, 12, 21) for altering the internal tyre pressure as well as a control unit (20),
**characterised in that**
at least the further axle (17) is equipped with tyres whose internal tyre pressure assumes a higher value when the all-wheel drive is cut in than when the all-wheel drive is cut out, by the control unit (20) detecting cutting in or cutting out of the all-wheel drive and initiating a change in the internal tyre pressure of the tyres by the tyre pressure regulating installation (6).

2. An agricultural harvester (1) according to claim 1 **characterised in that** the further axle is in the form of a steering axle (17).

3. An agricultural harvester (1) according to one of claims 1 and 2 **characterised in that** the control unit (20) of the tyre pressure regulating installation (6) is connected to a control apparatus (13) of the harvester (1).

4. An agricultural harvester (1) according to one of claims 1 to 3 **characterised in that** the harvester (1) has a sensor system which detects the nature of the ground on which the harvester (1) is moved.

5. An agricultural harvester (1) according to claim 4 **characterised in that** the sensor system for detecting the nature of the ground is in the form of a camera (25).

6. An agricultural harvester (1) according to claim 4 **characterised in that** the sensor system for detecting the nature of the ground is in the form of an ultrasonic sensor (26).

7. An agricultural harvester (1) according to one of claims 1 to 6 **characterised in that** the harvester (1) includes a sensor system which is adapted to detect the speed of travel.

8. An agricultural harvester (1) according to one of claims 1 to 7 **characterised in that** the harvester (1) is equipped with a sensor system adapted to determine the respective axle load of the drive axle (16) and of the further axle (17).

## Revendications

1. Machine agricole de récolte (1) comprenant au moins un essieu moteur (16) équipé de pneumatiques (7) et au moins un autre essieu (17) qui est équipé de pneumatiques (8) et qui, par l'intermédiaire d'une transmission intégrale activable ou désactivable, peut être utilisé comme essieu tracté ou comme essieu entraîné, ainsi que comprenant une installation de réglage de pression de pneumatiques (6) qui comporte des moyens (11, 12, 21) pour modifier la pression intérieure des pneumatiques ainsi qu'une unité de commande (20), **caractérisée en ce qu'**au moins l'autre essieu (17) est équipé de pneumatiques dont la pression intérieure de pneumatiques adopte, lors de l'activation de la transmission intégrale, une valeur plus élevée qu'avec la transmission intégrale désactivée par le fait que l'unité de commande (20) détecte l'activation ou la désactivation de la transmission intégrale et provoque une modification de la pression intérieure de pneumatiques des pneumatiques par l'intermédiaire de l'installation de réglage de pression de pneumatiques (6).

2. Machine agricole de récolte (1) selon la revendication 1, **caractérisée en ce que** l'autre essieu est conformé en essieu directeur (17).

3. Machine agricole de récolte (1) selon une des revendications 1 ou 2, **caractérisée en ce que** l'unité de commande (20) de l'installation de réglage de pression de pneumatiques (6) est reliée à un dispositif de commande (13) de la machine de récolte (1).

4. Machine agricole de récolte (1) selon une des revendications 1 à 3, **caractérisée en ce que** la machine de récolte (1) comporte un moyen de capteur qui détecte la nature du terrain sur lequel la machine de récolte (1) se déplace.

5. Machine agricole de récolte (1) selon la revendication 4, **caractérisée en ce que** le moyen de capteur destiné à détecter la nature du sol est conçu sous la forme d'une caméra (25).

6. Machine agricole de récolte (1) selon la revendication 4, **caractérisée en ce que** le moyen de capteur destiné à détecter la nature du sol est conçu sous la forme d'un capteur à ultrasons (26).

7. Machine agricole de récolte (1) selon une des revendications 1 à 6, **caractérisée en ce que** la machine de récolte (1) comprend un moyen de capteur qui est agencé pour déterminer la vitesse de marche.

8. Machine agricole de récolte (1) selon une des revendications 1 à 7, **caractérisée en ce que** la machine de récolte (1) est équipée d'un moyen de capteur qui est agencé pour déterminer la charge d'essieu respective de l'essieu moteur (16) ainsi que de l'autre essieu (17).
